# EUROPEAN PATENT APPLICATION

(11) **EP 3 797 965 A1**
(43) Date of publication of application: **31.03.2021**
(21) Application number: 20197362.5
(22) Date of filing: 22.09.2020
(51) Int. Cl.: B29C 45/27, B29C 45/28

(54) **INJECTION MOLDING APPARATUS WITH A THERMAL BRIDGE**

(30) Priority: 24.09.2019 US 201962904817 P
(71) Applicant: Mold-Masters (2007) Limited, Georgetown ON L7G 4X5 (CA)
(72) Inventor: Tabassi, Payman, Rockwood, Ontario N0B 2K0 (CA); Bajwa, Gurvinder, Brampton, Ontario L6X 0X3 (CA)
(74) Representative: Grünecker Patent- und Rechtsanwälte PartG mbB

(57) **Abstract**

An injection molding apparatus is disclosed. The injection molding apparatus includes a hot runner system having a manifold for receiving material from a source and a nozzle for delivering molding material received from the manifold to a mold cavity. A valve pin that is connectable to an actuator for translating the valve pin between open and closed positions is slidably received in a valve pin seal at an upstream end of the nozzle. Hot runner system includes a thermal bridge that is in conductive thermal communication with the valve pin seal and, a cooled mold plate.

## Description

### CROSS REFERENCE TO RELATED APPLICATION

The present application claims the benefit of prior U.S. Appl. No. 62/904817, filed September 24, 2019, which is incorporated by reference herein in its entirety.

### TECHNICAL FIELD

The present invention relates to an injection molding apparatus, and in particular, to an injection molding apparatus with a thermal bridge.

### BACKGROUND

Egress of molding material from a hot runner through the interface between a valve pin and a valve pin seal which surrounds the valve pin where the valve pin enters the hot runner system is known in the art of injection molding as valve pin weepage. Valve pin weepage is undesirable.

### SUMMARY

Embodiments hereof are directed towards an injection molding apparatus having a hot runner system. A manifold for receiving material from a source has a manifold channel that extends between a manifold inlet and a manifold outlet. A nozzle for delivering molding material received from the manifold to a mold cavity has a nozzle channel that extends between a nozzle inlet and a nozzle outlet. A valve pin that is connectable to an actuator for translating the valve pin between an open position and a closed position extends through the manifold and the nozzle channel. A valve pin seal at an upstream end of the nozzle has a valve pin bore in communication with the nozzle channel and in which the valve pin is slidably received, and a thermal bridge is in conductive thermal communication with the valve pin seal and a cooled mold plate.

### BRIEF DESCRIPTION OF DRAWINGS

The foregoing and other features and advantages of the invention will be apparent from the following description of embodiments thereof as illustrated in the accompanying drawings. The drawings are not to scale.
FIG. 1 is a sectional view of a portion of an injection molding apparatus having a hot runner system with a thermal bridge in accordance with an embodiment of the present disclosure.
FIG. 2 is an enlarged view of a portion 2 of FIG. 1.
FIG. 3 is a sectional view of the upstream end of a nozzle and a thermal bridge in accordance with another embodiment of the present disclosure and shown installed in a portion of an injection molding system which is similar to portion 2 of the injection molding system of FIG. 1.
FIG. 4 is a sectional view of the upstream end of a nozzle and a thermal bridge in accordance with yet another embodiment of the present disclosure shown installed in a portion of an injection molding system which is similar to portion 2 of the injection molding system of FIG. 1.

### DETAILED DESCRIPTION

In the following description, "downstream" is used with reference to the general direction of molding material flow from an injection unit to a mold cavity of an injection molding system and to the order of components, or features thereof, through which the molding material flows from an inlet of the injection molding system to the mold cavity. "Upstream" is used with reference to the opposite direction. As used herein, the phrase, "conductive thermal communication" refers to components forming a physical pathway, through which heat can travel. Further, there is no intention to be bound by any expressed or implied theory presented in the preceding technical field, background, summary or the following detailed description.

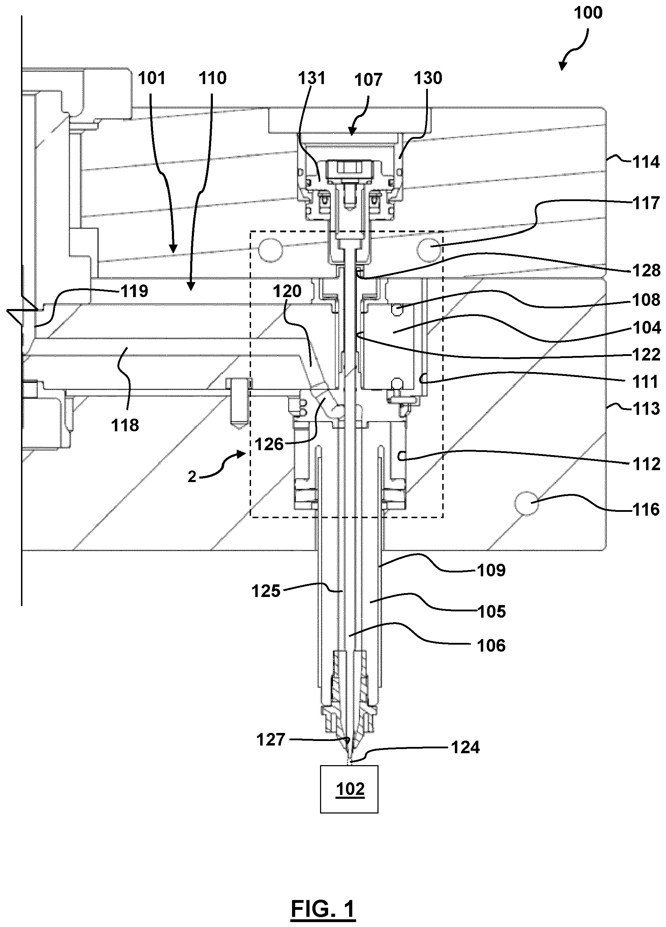

FIG. 1 is a sectional view of a portion of an injection molding apparatus **100** having a hot runner system **101** in accordance with an embodiment of the present disclosure. Hot runner system **101** delivers molding material received from a source, typically an injection molding machine (not shown), to a mold cavity **102** (shown schematically in FIG. 1) which defines the shape of a molded article that is formed in injection molding apparatus **100**. Hot runner system **101** includes a manifold **104**, a nozzle **105**, a valve pin **106**, and an actuator **107**. Manifold **104** and nozzle **105** include respective manifold and nozzle heaters **108**, **109** which, in operation, maintain manifold **104** and nozzle **105** at a suitable processing temperature.

Injection molding apparatus **100** includes a plurality of mold plates which form an enclosure **110** in which hot runner system **101** is received. Enclosure **110** includes a pocket **111** that surrounds manifold **104** and a well **112** that surrounds nozzle **105**. As shown, injection molding apparatus **100** includes a first mold plate **113** and a second mold plate **114**. Mold plates **113**, **114** are held together by fasteners (not shown) and typically include additional fastening/aligning components such as dowels and the like (not shown). While injection molding apparatus **100** is shown having two mold plates **113**, **114**, injection molding apparatus **100** can include other mold plates. Mold plates **113**, **114** include cooling channels, such as cooling channel **116** in first mold plate **113** and cooling channel **117** in second mold plate **114**. Cooling fluid is circulated through cooling channels **116**, **117** to maintain first and second mold plates **113**, **114** at a suitable molding temperature which is less than the operational temperature of manifold **104** and nozzle **105**.

Continuing with FIG. 1, manifold **104** includes a manifold channel **118** that extends between a manifold inlet **119** and a manifold outlet **120**. In operation, manifold **104** receives molding material from a source, via manifold inlet **119**, and delivers it to nozzle **105** via manifold outlet **120**. Manifold 104 further includes a valve pin passageway **122** through which valve pin **106** extends. Nozzle **105** delivers molding material to mold cavity **102** via a mold gate **124** (shown schematically in FIG. 1). Nozzle **105** includes a nozzle channel **125** extending between a nozzle inlet **126** and a nozzle outlet **127**. Valve pin **106** extends through valve pin passageway **122** and nozzle channel **125**. Upstream from manifold **104**, valve pin **106** extends through a plate bore **128** in second mold plate **114**, and at its upstream end, valve pin **106** is coupled to actuator **107** which translates valve pin **106** between a closed position and an open position. In its closed position, valve pin **106** is positioned to block mold gate **124**, which prevents moldable material from entering mold cavity **102**. In its open position, valve pin **106** is separated from mold gate **124** to allow molding material to be injected into mold cavity **102**. In FIG. 1, valve pin **106** is in its closed position. Actuator **107** includes a stationary part **130** secured to second mold plate **114** and a movable part **131** to which valve pin **106** is coupled to be movable therewith. In the illustrated embodiment, actuator **107** is a fluid driven actuator.

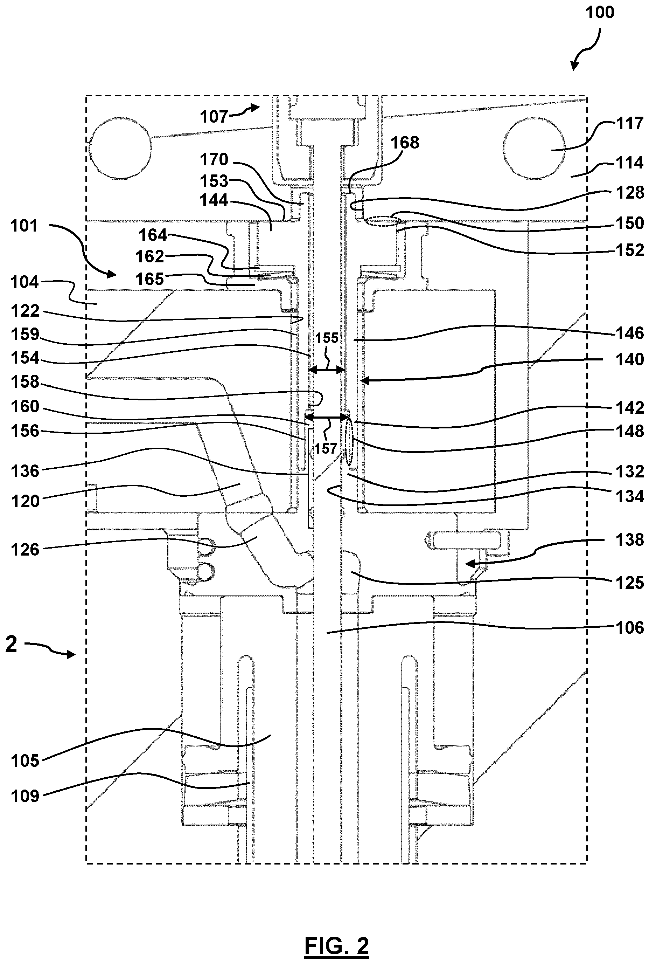

Referring now to FIG. 2 which is an enlarged view of a portion 2 of FIG. 1, an upstream end of nozzle **105** includes a valve pin seal **132**. Valve pin seal 132 includes a valve pin bore **134** through which valve pin **106** extends. A sealing interface **136** is a portion of valve pin bore **134** which is sized to slidably mate with valve pin **106** to promote a fluid seal therebetween. At sealing interface **136**, valve pin **106** and valve pin bore **134** are closely sized to reduce migration of molding material from nozzle channel **125** through valve pin bore **134**. In the current embodiment, valve pin seal **132** is a portion of a bushing component **138** which is a part of nozzle **105** and also defines nozzle channel inlet **126**.

In accordance with embodiments hereof, hot runner system **101** includes a thermal bridge **140** that is in conductive thermal communication with valve pin seal **132** and is in conductive thermal communication with second mold plate **114**. In operation, thermal bridge **140** conducts heat from valve pin seal **132** to second mold plate **114** which is cooler than valve pin seal **132**. Removing heat from valve pin seal **132** helps to maintain the fit between valve pin bore **134** and valve pin **106** which can limit or prevent molding material weepage.

To facilitate heat transfer from valve pin seal **132** to second mold plate 114, thermal bridge **140** is made from a material that is more thermally conductive than the material from which valve pin seal **132** is made. Non-limiting examples of such a material include copper, a copper alloy such as Beryllium Copper or AMPCOLOY 940® (available from AMPCO MATAL S.A. of Marly, Switzerland), molybdenum or a molybdenum alloy, and mold or tool steel, including NAK 55 or FASTCOOL®-50 (available from Rovalma S.A. of Barcelona, Spain).

Thermal bridge 140 extends through valve pin passageway **122** and is thermally insulated from manifold **104**. With reference to valve pin seal **132**, thermal bridge **140** includes a proximal portion **142** and a distal portion **144** that is longitudinally spaced apart from proximal portion **142** by a medial portion **146**. Proximal portion **142** is in conductive thermal communication with valve pin seal **132**. A proximal conductive heat transfer area **148** is defined between valve pin seal **132** and proximal portion **142**. Distal portion **144** is in conductive thermal communication with second mold plate **114**, which in the embodiment shown in FIGS. 1 and 2 is the mold plate to which actuator **107** is secured. A distal conductive heat transfer area **150** is defined between distal portion **144** and second mold plate **114**. Distal portion 144 is a part of a lateral portion **152** of thermal bridge 140 which extends radially outward from medial portion **146**. Lateral portion **152** includes an abutment surface **153** through which distal portion **144** is in conductive thermal communication with second mold plate **114**. In comparison to a version of thermal bridge **140** without a lateral portion **152**, the size of the surface area of distal heat transfer area **150** is increased, which can improve the effectiveness of thermal bridge **140**.

Proximal portion **142** longitudinally overlaps valve pin seal **132**, which creates a longitudinally extending proximal heat transfer area **148** between thermal bridge **140** and valve pin seal **132**. In the illustrated embodiment of FIGS. 1 and 2, thermal bridge **140** longitudinally overlaps valve pin seal **132** and is in conductive thermal communication with valve pin seal **132** along an area that at least partially overlaps sealing interface **136**. Thermal bridge **140** includes a longitudinally extending opening **154**, for example, a bore that extends therethrough. A length of an outer surface **156** of valve pin seal **132** is in conductive thermal communication with a wall **158** of opening **154**. Opening **154** also serves as a collection area into which molding material is deposited should molding material migrate through sealing interface **136**.

Continuing with FIGS. 1 and 2, opening **154** includes a first portion **155** having a first diameter and a second portion **157** having a second diameter. First portion **155** is sized to be thermally insulated from valve pin **106** by, for example an air gap between wall **158** of opening **154** and valve pin **106**. The diameter of second portion **157** is larger than the diameter of the first portion **155** and is sized for conductive thermal communication with valve pin seal **132**. An outer surface **159** of thermal bridge **140** is thermally insulated from valve pin passageway **122** by, for example an air gap. Also shown in the illustrated embodiment of FIGS. 1 and 2, the upstream end of valve pin seal **132** includes a reduced wall thickness portion **160**. Second portion **157** and reduced thickness portion **160** are sized relative to each other so that reduced wall thickness portion **160** is in conductive thermal communication with thermal bridge **140**.

Opening **154** having two differently sized portions **155**, **157** in combination with reduced wall thickness portion **160** help to reduce the overall space required to accommodate thermal bridge **140** while maintaining sufficient wall thickness of thermal bridge **140** to sufficiently conduct heat to second mold plate **114**, in an alternative embodiment (not shown) opening **154** is shaped as a straight bore that extends through thermal bridge **140** which is thermally insulated from valve pin **106**, and sized for conductive thermal communication with valve pin seal **132**.

Engagement between valve pin seal 132 and wall 158 creates a proximal heat transfer area 148 that surrounds valve pin seal **132**. This configuration allows heat to be conducted away from around the circumference of outer surface **156** of valve pin seal **132**, which may be beneficial for evenly affecting the temperature of valve pin bore around the perimeter of valve pin **106**; however, in applications in which it might be beneficial to draw heat away from a specific side or portion of valve pin seal **132**, it may be beneficial for thermal bridge **140** and valve pin seal **132** to be in conductive thermal communication only partially around valve pin seal **132** which would create a proximal heat transfer area **148** that partially surround valve pin seal **132**.

Thermal bridge 140 is mounted within injection molding apparatus **100** to permit longitudinal displacement of valve pin seal **132** relative to second mold plate **114** which may occur as a result of, for example, thermal expansion of nozzle **105**. One way of accomplishing this is to mount thermal bridge **140** so that it is longitudinally fixed in position relative to one of valve pin seal **132** and second mold plate **114** while being longitudinally displaceable relative to the other of the valve pin seal **132** and second mold plate **114**.

In the illustrated embodiment of FIGS. 1 and 2, distal portion **144** is longitudinally fixed in position relative to second mold plate **114**. To facilitate this, hot runner system **101** includes a biasing member **162**, for example a Bellville washer, disposed between lateral portion **152** and manifold **104**. In operation, biasing member 162 is energized and bears against manifold **104** to urge lateral portion **152** into conductive thermal communication with second mold plate **114** to form a rigid abutting connection therebetween. Other types of rigid connections between distal portion **144** and second mold plate **114** are contemplated for embodiments disclosed herein, including a threaded connection, a bayonet connection, and an interference connection. Regarding valve pin seal **132**, wall **158** of opening **154** is slidably engaged with outer surface **156** of valve pin seal **132** to permit longitudinal displacement of valve pin seal 132 relative to second mold plate **114**.

In embodiments that include a biasing member **162** which abuts thermal bridge **140** into conductive thermal communication with second mold plate **114**, hot runner system 101 can include a wear pad **164**, for example, a washer as shown in FIG. 2, disposed between biasing member **162** and the area on thermal bridge **140**, e.g. lateral portion **152**, upon which biasing member **162** acts, which may prevent marring of thermal bridge **140**. Further, hot runner system 101 can include another wear pad **165** disposed between biasing member **162** and the area on manifold **104** against which biasing member 162 acts to prevent marring of manifold **104**.

Continuing with FIG. 2, lateral portion **152** is longitudinally spaced apart from a distal end **168** of thermal bridge **140**. In this this configuration, thermal bridge 140 includes a head portion 170 that projects into second mold plate **114**. Head portion **170** increases the length of opening **154** which lengthens the collection area into which molding material may be deposited. Since head portion **170** is adjacent to distal portion **144**, the temperature of opening **154** is relatively cool adjacent to actuator **107**, which reduces the likelihood of molding material from migrating to actuator **107**.

Head portion **170** can be spaced apart from plate bore **128** as is shown. Alternatively, head portion **170** is sized relative to plate bore **128** to establish conductive thermal communication therebetween which increases the size of the surface area of distal heat transfer area **150** and laterally locates thermal bridge **140** relative to second mold plate **114**.

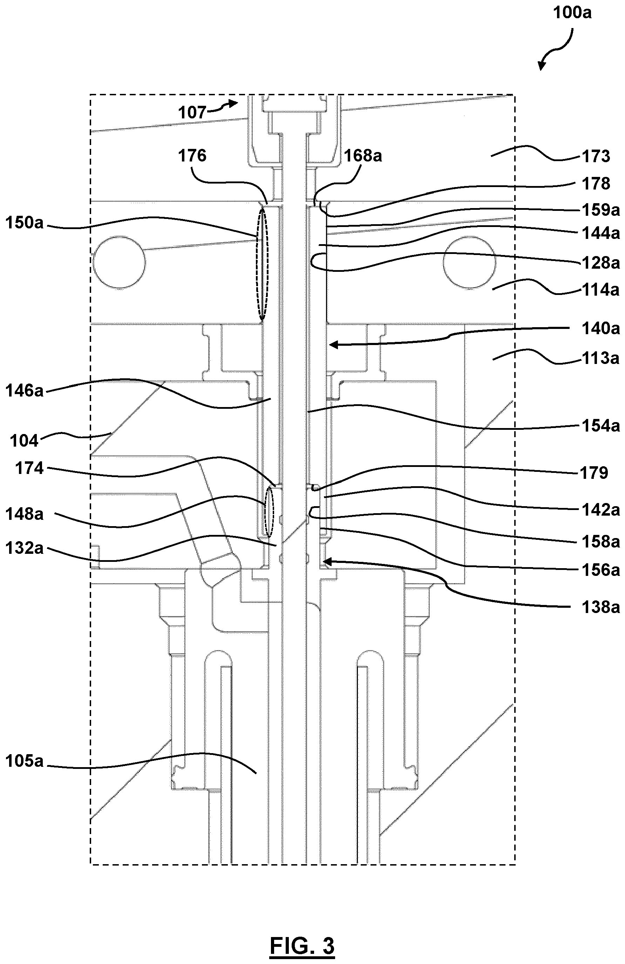

Referring now to FIG. 3 which is a sectional view of the upstream end of a nozzle **105a** and a thermal bridge **140a** in accordance with another embodiment of the present disclosure shown installed in a portion of an injection molding system **100a** which is similar to portion 2 of injection molding system **100** of FIG. 1. Features and aspects of the other embodiments can be used with the present embodiment. In the current embodiment thermal bridge **140a** is in conductive thermal communication with second mold plate **114a** at plate **bore128a**. Thermal bridge **140a** can be described as sleeve shaped and includes a proximal portion **142a** and a distal portion **144a** that is spaced apart from proximal portion by a medial portion **146a**. Distal portion **144a** is in conductive communication with second mold plate **114a**. A distal heat transfer area **150a** is formed between an outer surface **159a** of thermal bridge **140a**, at distal portion **144a**, and plate bore **128a** which extends through second mold plate **114a**. In the present embodiment, second mold plate **114a** is an intermediate mold plate that is sandwiched between first mold plate **113a** and a third mold plate **173** to which actuator **107** is secured. Proximal portion **142a** is in conductive thermal communication with valve pin seal **132a**. A proximal heat transfer area **148a** is defined between outer surface **156a** of valve pin seal **132a** and wall **158a** of opening **154a** in thermal bridge **140a**. In the current embodiment valve pin seal **132a** is a bushing component **138a** that is received in the upstream end of nozzle **105a**.

Thermal bridge **140a** is mounted within injection molding apparatus **100a** to permit longitudinal displacement of valve pin seal **132a** relative to second mold plate **114a**. In one example, distal portion **144a** is longitudinally fixed in position relative to second mold plate 114a by, for example a threaded connection between outer surface **159a** of thermal bridge **140a**, at distal portion **144a**, and plate bore **128a**, and proximal portion **142a** is longitudinally slidable relative to valve pin seal **132a** by, for example, a slide fit connection between outer surface **156a** of valve pin seal **132a** and wall **158a** of opening **154a**. In this configuration a gap **174**, is provided between valve pin seal **132a** and thermal bridge **140a** which accommodates longitudinal displacement of valve pin seal **132a** relative to thermal bridge **140a**. Alternatively, proximal portion **142a** can be longitudinally fixed in position relative to valve pin seal **132a** by, for example a threaded connection between outer surface **156a** of valve pin seal **132a** and wall **158a** of opening **154a**, and distal portion **144a** is longitudinally slidable relative to second mold plate **114a** by, for example, a slide fit connection between outer surface **159a** of thermal bridge **140a** at distal portion **144a** and plate bore **128a**.

In this configuration a gap, shown at location **176**, is provided between distal end **168a** of thermal bridge **140a** and the downstream side **178** of third mold plate **173** which accommodates longitudinal displacement of valve pin seal 132a and thermal bridge 140a relative to third mold plate **173**.

In another example, longitudinal displacement of valve pin seal **132a** relative to second mold plate **114a** is accommodated by slidably engaging thermal bridge **140a** with valve pin seal **132a** and with second mold plate **114a**. For example, thermal bridge **140a** is slidably engaged with second mold plate **114a** by, for example, a slide fit connection between outer surface **159a** of thermal bridge **140a** at distal portion **144a** and plate bore **128a** and proximal portion **142a** is slidably engaged with valve pin seal **132a** by, for example, a slide fit connection between outer surface **156a** of valve pin seal **132a** and wall **158a** of opening **154a**. In such a configuration thermal bridge **140a** is longitudinally displaceable relative to both valve pin seal **132a** and second mold plate **114a**. Longitudinal movement of valve pin seal **132a** is accommodated by gap **174**, between valve pin seal **132a** and thermal bridge **140a** and gap **176**, between thermal bridge **140a** and third mold plate **173**. The amount of longitudinal movement of thermal bridge **140a** is limited by boundary surfaces such as downstream side **178** of third mold plate **173** and a step **179** in opening **154a** in order to maintain conductive thermal communication between valve pin seal **132a** and third mold plate **173** via thermal bridge **140a**.

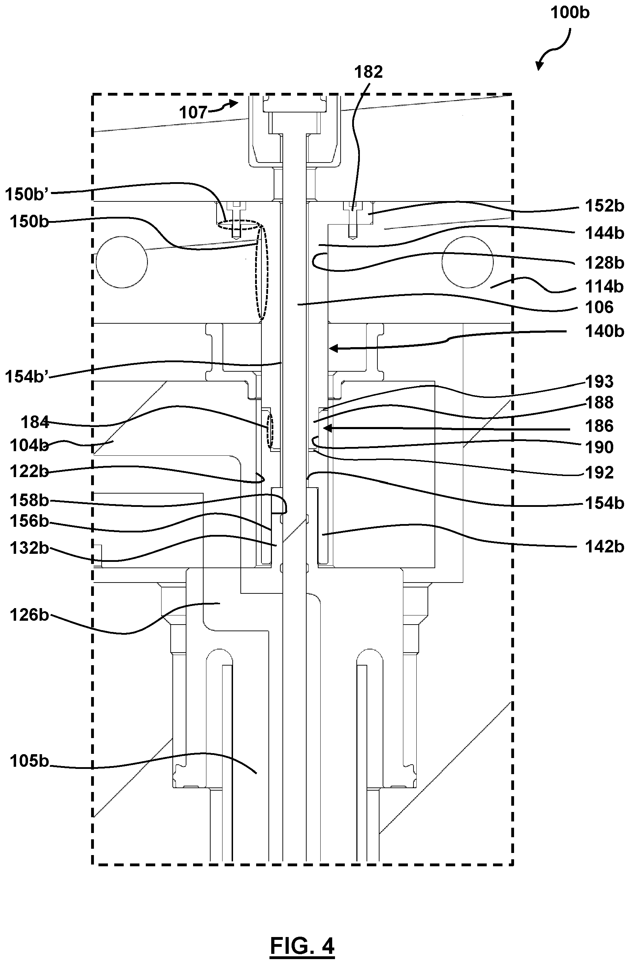

Referring now to FIG. 4 which is a sectional view of the upstream end of a nozzle **105b** and a thermal bridge **140b** in accordance with another embodiment of the present disclosure, shown installed in a portion of an injection molding system **100b**, which is similar to portion 2 of injection molding system **100** of FIG. 1. Features and aspects of the other embodiments can be used with the present embodiment. Thermal bridge includes discrete proximal and distal portions **142b**, **144b**. Distal portion **144b** is in conductive communication with second mold plate **114b** and proximal portion **142b** is in conductive thermal communication with valve pin seal **132b**. A proximal component opening **154b** extends longitudinally through proximal portion **142b** and a distal component opening **154b'** extends longitudinally through distal portion **144b**; valve pin **106** passes through both proximal and distal portion openings **154b**, **154b'**. In the current embodiment valve pin seal **132b** is a unitary portion of nozzle **105b**, as is nozzle channel inlet **126b**.

Distal portion **144b** is rigidly coupled to second mold plate **114b** and extends through plate bore **128b** in second mold plate **114b** and into valve pin passageway **122b** in manifold **104b**. As shown in FIG. 4, distal portion **144b** includes a lateral portion **152b** that is in conductive thermal communication with second mold plate **114b**. As shown, fasteners **182** secure distal portion **144b** to second mold plate **114b**. Alternatively (not shown), distal portion **144b** is secured in place by clamping lateral portion **152b** between second mold plate **114b** and third mold plate **173** to create an abutment connection between thermal bridge **140b** and second mold plate **114b**. A first distal heat transfer area **150b** is defined between distal portion **144b** and plate bore **128b** and a second distal heat transfer area **150b'** is defined between lateral portion **152b** and second mold plate **114b**. Proximal portion **142b** is rigidly coupled to valve pin seal **132b** by, for example a threaded connection created by complementary threads on outer surface **156b** of valve pin seal **132b** and a wall **158b** of proximal portion opening **154b**. Proximal portion **142b** is in conductive thermal communication with distal portion **144b** at a medial heat transfer area **184** that is defined by a telescopic connection **186** between distal portion **144b** and proximal portion **142b**. Telescopic connection 186 is realized by a plug **188** that projects from distal portion **144b** and is slidably received in a complementary socket **190** in proximal portion **142b**. Distal portion **144b** and proximal portion **142b** are sized to form longitudinal gaps **192**, **193** which accommodate longitudinal displacement of proximal portion **142b** as a result of longitudinal displacement of valve pin seal **132b** that may occur because of lengthwise thermal expansion of nozzle **105b**. Telescopic connection **186** can also be realized by providing proximal portion **142b** with a plug **188** which is slidably received in a complementary socket **190** in distal portion **144b** (not shown).

Proximal and distal portions **142b**, **144b** can be made from the same material, for example copper or a copper alloy, or can be made from different materials. For example, the portion of thermal bridge **140b** having socket **190**, i.e. proximal portion **142b** in FIG. 4, can be made from molybdenum or a molybdenum alloy, and the portion of thermal bridge **140b** having plug **188**, i.e. distal portion **144b** in FIG. 4 can be made from copper or a copper alloy. In this example, due to the different thermal expansion rates of molybdenum materials and copper materials, thermal expansion across socket **190** is less than thermal expansion across plug **188**. This material combination results in a closer fit between plug **188** and socket **190** when injection molding apparatus **100b** is in operation compared to when injection molding apparatus **100b** is assembled and not in operation. This arrangement facilitates assembly of thermal bridge **140b** and promotes conductive thermal communication across medial heat transfer area **184**.

While various embodiments have been described above, they are presented only as illustrations and examples, and not by way of limitation. Thus, the present invention should not be limited by any of the above-described embodiments but should be defined only in accordance with the appended claims and their equivalents.

## Claims

1. An injection molding apparatus (100) comprising:
a hot runner (101) system having
a manifold (104) for receiving material from a source, the manifold having a manifold channel (118) extending between a manifold inlet (119) and a manifold outlet (120);
a nozzle for delivering molding material received from the manifold to a mold cavity, the nozzle having a nozzle channel extending between a nozzle inlet and a nozzle outlet;
a valve pin connected to an actuator for translating the valve pin between an open position and a closed position, the valve pin extending through the manifold and the nozzle channel;
a valve pin seal at an upstream end of the nozzle, the valve pin seal having a valve pin bore in which the valve pin is slidably received, the valve pin bore in communication with the nozzle channel; and
a thermal bridge extending through a valve pin passageway in the manifold, the thermal bridge being in conductive thermal communication with the valve pin seal, and when the injection molding apparatus is assembled, is in conductive thermal communication with a cooled mold plate.

2. The injection molding apparatus of claim 1, wherein the thermal bridge longitudinally overlaps the valve pin seal to create a longitudinally extending conductive heat transfer area between the thermal bridge and the valve pin seal.

3. The injection molding apparatus of claim 2, wherein a first conductive heat transfer area between the thermal bridge and the valve pin seal at least partially overlaps a sealing engagement portion of the valve pin bore.

4. The injection molding apparatus of claim 1, wherein a conductive heat transfer area between the thermal bridge and the valve pin seal at least partially surrounds the valve pin seal.

5. The injection molding apparatus of claim 4, wherein the thermal bridge includes a longitudinally extending opening having a wall and a length of an outer surface of the valve pin seal is in conductive thermal communication with the wall of the opening wherein the opening is a cylindrical bore including a first portion having a first diameter, the first portion of the cylindrical bore being thermally insulated from the valve pin, and the cylindrical bore includes a second portion having a second diameter larger than the first diameter, and a wall of the second diameter portion is in conductive thermal communication with the outer surface of the valve pin seal.

6. The injection molding apparatus of claim 1, wherein the thermal bridge is thermally insulated from the valve pin by an air gap that surrounds the valve pin.

7. The injection molding apparatus of claim 1, wherein the thermal bridge includes an inner surface that is in conductive thermal communication with an outer surface of the valve pin seal.

8. The injection molding apparatus of claim 7, wherein the thermal bridge includes a lateral portion, in operation, the lateral portion is in conductive thermal communication with the cooled mold plate, and the injection molding apparatus further comprising:
a biasing member disposed between the lateral portion and the manifold, in operation the biasing member urging the lateral portion towards the cooled mold plate.

9. The injection molding apparatus of claim 7, wherein, in operation, an outer surface of the thermal bridge is in conductive thermal communication with a bore in the cooled mold plate.

10. The injection molding apparatus of claim 1, wherein the thermal bridge is longitudinally fixed in position relative to one of the valve pin seal and the cooled mold plate and is longitudinally slidable relative to the other of the valve pin seal and the cooled mold plate.

11. The injection molding apparatus of claim 10, wherein the thermal bridge is longitudinally fixed in position relative to the cooled mold plate and the valve pin seal is slidably received in the thermal bridge, and longitudinally fixed includes a connection between the thermal bridge and the cooled mold plate by way of at least one of an interference connection, a threaded connection, a bayonet connection, and an abutment connection.

12. The injection molding apparatus of claim 10, wherein, the thermal bridge is longitudinally fixed in position around the valve pin seal and is longitudinally slidable within a bore in the cooled mold plate, and longitudinally fixed includes a connection between the thermal bridge and the valve pin seal by way of at least one of an interference connection, a threaded connection, a bayonet connection, and an abutment connection.

13. The injection molding apparatus of claim 1, wherein the size of a surface area of a first conductive heat transfer area between the thermal bridge and the cooled mold plate is greater than the size of a surface area of a second conductive heat transfer area between the thermal bridge and the valve pin seal.

14. The hot runner system of claim 1, wherein the thermal bridge includes a proximal portion fixed in position relative to the valve pin seal and a distal portion fixed in position relative to the cooled mold plate, wherein the proximal portion is in conductive thermal communication with the distal portion by a telescopic connection between the proximal portion and the distal portion.

15. The hot runner system of claim 1, wherein the thermal bridge is made from a material that is more thermally conductive than the material from which the valve pin seal is made.
